(19) Europäisches Patentamt

European Patent Office

Office européen des brevets

(11) **EP 2 034 659 A2**

(12) **EUROPEAN PATENT APPLICATION**

(43) Date of publication:
**11.03.2009  Bulletin 2009/11**

(51) Int Cl.:
***H04L 9/08*** *(2006.01)*

(21) Application number: **08251114.8**

(22) Date of filing: **27.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.06.2007  US 762442**

(71) Applicant: **Intel Corporation (INTEL)
Santa Clara, CA 95052-8119 (US)**

(72) Inventors:
 • **Zhao, Meiyusan
  Hilsboro
  OR 97124 (US)**
 • **Walker, Jesse
  Portland
  OR 97229 (US)**

(74) Representative: **Hutchinson, Glenn Stanley
  Harrison Goddard Foote
  Fountain Precinct
  Balm Green
  Sheffield
  S1 2JA (GB)**

(54)    **Apparatus and method for deriving keys for securing peer links**

(57)    Apparatus and methods to establish a secure peer-to-peer link in which the construction of a link authentication and key encryption keys are separated from the session encryption key are described herein. In an embodiment, a secure peer-to-peer link is established in a wireless mesh network.

**FIG. 1**

EP 2 034 659 A2

**Description**

Technical Field

Embodiments of the invention relate generally to apparatus and methods for establishing a secure peer-to-peer link.

Background

Communication networks may be structured with various architectural designs. In the design of many such communication networks, security is an integral component. As new designs for communication networks are developed, security should be addressed. However, implementation of security schemes includes processing and procedures that add delay and/or complexity to the desired transmission of content. The reduction of complexity or time to establish the secure connections in communication networks should be approached without degrading the quality of service in transmission through enhanced designs for communication networks.

Brief Description of the Drawings

Embodiments of the invention are illustrated by way of example and not limitation in the figures of the accompanying drawings in which:

Figure 1 shows a representation of an embodiment for a peer-to-peer communication link between node A and node B.
Figure 2 shows features of an embodiment of a mesh network having a number of mesh points, where communication between two individual mesh points is established on a peer-to-peer basis.
Figure 3 shows a flow diagram of features of an embodiment of a method to derive keys during a peer link establishment protocol execution between two mesh points on a mesh network.
Figure 4 illustrates a key hierarchy derived using an algorithm in accordance with the discussion of embodiments herein.
Figure 5 illustrates an embodiment of the key derivation process during the peer link establishment protocol execution.
Figure 6 shows a block diagram of an embodiment of a wireless communication device in accordance with various embodiments to derive keys during a peer link establishment protocol execution.
Figure 7 illustrates a block diagram of an embodiment of a system in accordance with various embodiments to derive keys during a peer link establishment protocol execution.

Detailed Description

The following detailed description refers to the accompanying drawings that show, by way of illustration, details and embodiments in which the invention may be practiced. These embodiments are described in sufficient detail to enable those skilled in the art to practice embodiments of the present invention. Other embodiments may be utilized and structural, logical, and electrical changes may be made without departing from the inventive subject matter. The various embodiments disclosed herein are not necessarily mutually exclusive, as some embodiments can be combined with one or more other embodiments to form new embodiments. The following detailed description is, therefore, not to be taken in a limiting sense.

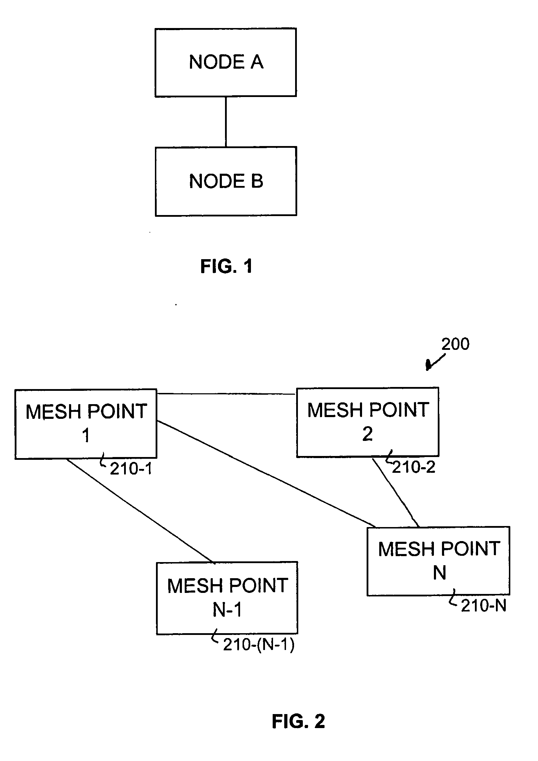

Figure 1 shows a representation of an embodiment for a peer-to-peer communication link between node A and node B. In various embodiments, the construction of a link authentication key and a key encryption key are separated from construction of a session encryption key during a peer link establishment protocol between node A and node B. Node A and node B may be realized as independent electronic devices that can be given unique identifiers to identify each device among a larger set of devices. Each unique identifier can be compared according to a rule set. The rule set may be based on the manner that generates each unique identifier or on the format for each unique identifier. The link authentication key and the key encryption key may be constructed using the identifiers for the two nodes prior to sending a first message in the link establishment protocol. The construction may include operation of a key derivation function on the identifiers, where the key derivation function is realized as a pseudo-random function under a master key. The master key may be realized as a key limited to use with node A and node B.

After determining the link authentication key and the key encryption key, the first message from node A to node B may be sent. The authentication key and the key encryption key may be used to protect against forgery in the first messages and allow for the encryption of a group key into the first message. In addition, the first messages provide for the transferal of a random number generated at each of the nodes.

After receiving the first messages, the session encryption key may be derived, where the session key provides for data encryption. The session encryption key may be derived using the same derivation function under the pairwise master key for nodes A and node B as used in deriving authentication key and the key encryption key. The process of establishing the secure peer link may be accomplished in fewer than five link establishment messages.

Figure 2 shows features of an embodiment of a mesh network 200 having a number of mesh points, 210-1 ... 210-N, where communication between two individual mesh points is established on a peer-to-peer basis. The direct connectivity among mesh points 210-1 ... 210-N may vary depending on the application. In various embodiments, a communication channel between mesh points 210-1 ... 210-N on a pairwise basis may be provisioned according to network rules. Each mesh point 210-1 ... 210-N has a unique identifier. The unique identifiers may be arranged in an order based on a rule set. Any pairwise combination of mesh points may have its own pairwise master key for the two mesh points in the combination. Derivation of keys for securing peer links in mesh network 200 between two different mesh points 210-I and 210-J, $1 \leq I, J \leq N$ may be conducted in a manner similar to that discussed above with respect to node A and node B in which the construction of a link authentication key and a key encryption keys is separated from construction of the session encryption key. This separation enables security to be overlaid on top of the mesh link establishment protocol. A rule set may be used to order the two unique identifiers on which a key derivation function under the pairwise master key for the two mesh points operates. The key distribution function may be a pseudo-random function. The process of establishing the secure peer link in mesh network 200 may be accomplished in fewer than five link establishment messages. The mesh points may belong to a wireless mesh network.

Various standards for wireless communications are provided by the Institute of Electrical and Electronics Engineers (IEEE). An amendment, IEEE 802.11 s, to the IEEE 802.11 standard, when completed, will add mesh capabilities to the wireless local area networking (WLAN) standard. The mesh architecture allows data to be forwarded on paths consisting of multiple wireless hops. IEEE 802.11s was chartered to improve the throughput of data transmission by adding the mesh capabilities without compromising security and without degrading quality of service (QoS) across transitions. This amendment may be used in applications that provide video streaming over the mesh.

However, video streams may expect that peer links on a mesh be established quickly, regardless of noise on a wireless fidelity (Wi-Fi) medium. As a result, there is concern regarding the completion of a secure peer link establishment process in the time available. To address this concern, protocols are being investigating that expedite the procedure of establishing secure peer links by overlaying security handshake on top of a basic peer link establishment protocol. Such a scheme permits wireless local area network (WLAN) Mesh Points (MPs) to omit certain steps in the secure link establishment process, if they have priori knowledge and control of a previously established pairwise master key (PMK). This approach may enhance user experience of video stream applications on the wireless mesh given that MPs frequently lose connectivity on certain links. However, this approach uses keys at an earlier stage of the link establishment process than is conducted using the IEEE 802.11 i key hierarchy, which means that the current IEEE 802.11 i keying procedure may not work correctly with such an approach in a IEEE 802.11 s scheme.

In securing a peer-to-peer link, various keys are used. KCK denotes a derived key confirmation key used during link establishment. KCK is also known as the authentication key. KEK denotes a derived key encryption key, which is used in link establishment to distribute broadcast keys. Tk denotes a data encryption key, which is also known as a temporal key. A key derivation function, denoted as $kdf_k$, may be used in the peer link establishment process, where K is a pairwise master key.

To secure the IEEE 802.11s link establishment protocol, KCK and KEK are used in the first message, since the protocol operates in the peer-to-peer model. The 802.11i key derivation procedure is

$$KCK \parallel KEK \parallel TK \leftarrow kdf_K(\max(RA, RB) \parallel \min(RA, RB) \parallel \max(MPA, MPB) \parallel \min(MPA, MPB)),$$

where "a ∥b" denotes the concatenation of a and b, "a ← b" denotes assignment of the expression b to the variable a, RA is a random value created by peer A, and RB is a random value created by peer B. This binds the keys to the link establishment instance. The result of the application of $kdf_K$ is the generation of KCK, KEK, and TK in a concatenated format. IEEE 802.11 can feasibly utilize this procedure, because it is based on the client-server model, where key usage can be deferred until the second link establishment message. This deferral is not possible in the peer-to-peer model. In particular, if key derivation is deferred to the second message in the peer-to-peer model, then it becomes infeasible for peer A and peer B to use KCK to mutually authenticate.

In addition, in order to achieve consistent state of the link when the peer link establishment protocol succeeds, the group key, GTK, should be delivered to the peer in the first message so that the key wrapping (encrypting) of the GTK and the correct delivery can be confirmed by the peer by sending the second message in the peer link establishment procedure. The IEEE 802.11 i key derivation procedure makes it infeasible to use the KEK to wrap the GTK before sending the first message.

In various embodiments, secure link establishment in a wireless network is enabled in a peer-to-peer networking model. The use of the KCK for wireless meshes, such as but not limited to IEEE 802.11s meshes, to secure their link establishment protocol within the peer-to-peer model is allowed earlier than is possible with a IEEE 802.11 i key derivation. Embodiments for a new key derivation procedure and key hierarchy compatible with the mesh four message link establishment protocol are provided herein. In various embodiments, an advanced encryption standard (AES) counter mode may be applied as the key derivation function to derive all keys to secure the peer link. Such a design allows the application of a standard proof of security for the key derivation procedure.

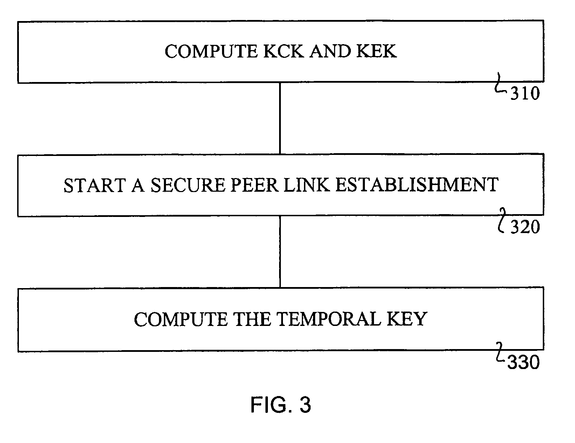

Figure 3 shows a flow diagram of features of an embodiment of a method to derive keys during a peer link establishment protocol execution between two mesh points on a mesh network. The mesh points, parties in a network, may be electronic devices in the mesh network. In the following, the two mesh points are referenced as mesh point A and mesh B. Both mesh point A and mesh point B include an identifier that is unique. Each identifier has a common characteristic or format that allows the selection of one of the identifiers based on some rule or criterion. Herein, the identifier for mesh point A is denoted as MPA and the identifier for mesh point B is denoted as MPB. The mesh point identifiers may be totally ordered. In an embodiment, the ordering may be based on the relative magnitude of one identifier with respect to the other identifier. For example, mesh point A's identifier may be larger in the ordering than B's identifier. In an embodiment, the IEEE 802.11 medium access control (MAC) address of mesh point A may be a value for MPA, with the 802.11 MAC address of B being a value for MPB. The use of MAC addresses allows a fixed criterion that uses the relative differences between identifiers of mesh A and mesh B. The IEEE 802.11 MAC addresses can be lexicographically ordered, so the concept of larger, smaller, minimum, and maximum is well-defined.

Such a fixed rule is not limited to the two given mesh points A and B, but may apply to all the mesh points in the network. As an example, MAC addresses used as device identifiers can be totally ordered by ordering them lexicographically. Under this arrangement, since the MAC address uniquely identifies a device, one mesh point's MAC address will also be strictly larger than the other's with respect to the lexicographical order. Rather than MAC addresses, other unique identifiers may be used.

Each mesh point in the network is in a state that it maintains. In an embodiment, each mesh point maintains a cached pairwise master key K. The master key K may be an authorization token, whose possession demonstrates authorization to access a communication channel. For example, the communication channel may be an IEEE 802.11 channel. The communication channel in the mesh network may be a communication channel other than an IEEE 802.11 channel.

In various embodiments, a single cryptographic primitive may be used, which is the use of key derivation function, $kdf_k$. $kdf_k$ may be used to secure both link establishment and the data subsequently exchanged over the link. The function $kdf_k$ may be based on a pseudo-random function. Use of the pseudo-random function means that it is computationally infeasible for an adversary to relate two different keys computed by kdf under K, even if the inputs used in the key derivation differ by only a single bit. In various embodiments, the pairwise master key K is shared only between mesh point A and mesh point B. Further, K may be established in some secure fashion using any of known techniques. With K known exclusively by mesh point A and mesh point B, it can be used to authenticate mesh point B to mesh point A and vice versa. Hence, mesh point A and mesh point B use K to establish new links between each other. In an embodiment, K is only used for the purpose of establishing new links between each other.

At 310 of Figure 3, KCK and KEK are computed. When party A or party B wishes to establish a secure link with the other, it uses its associated pairwise master key, K, to compute:

$$\mathrm{KCK} \parallel \mathrm{KEK} \leftarrow \mathrm{kdf_K}(0 \parallel \max(\mathrm{MPA}, \mathrm{MPB}) \parallel \min(\mathrm{MPA}, \mathrm{MPB})).$$

KCK and KEK can be extracted from KCK $\parallel$ KEK depending on the rules of the network application in which mesh points A and B are parties. KCK and KEK are computed before the first two messages (the first message from party A to party B and the first message from party B to party A) of the mesh link establishment protocol are transmitted. Party B's identifier, MPB, is learnt by party A prior to the computation of KCK and KEK. Party A's identifier, MPA, is also learnt by party B prior to the computation of KCK and KEK. Various methods may be used in the acquiring MPB and MPA. In an embodiment, MPB and MPA may be acquired using a Beacon broadcast of these identifiers. Alternatively, for a given mesh point, the mesh point identifiers for one or more mesh points other than the given mesh point may be provisioned at the mesh point. The various embodiments are not limited by the manner in which a mesh point acquires mesh point identifiers prior to transmitting the first two peer link establishment messages.

At 320, a secure peer link establishment is started. A first message from mesh point A is sent to mesh point B in which a random number, RA, generated by mesh point A is inserted in this first message. A first message from mesh point B is sent to mesh point A in which a random number, RB, generated by mesh point B is inserted in this first message. With KEK computed, the group key GTK can be encrypted using KEK and distributed in the first messages. The distribution of GTK in the first messages provides consistency between mesh point A and mesh B, since only the parties that know KEK can decrypt the random bits to extract a correct GTK. KCK may be used to protect against forgery in the transmission of the first messages.

At 330, the temporal key is computed, where the temporal key is the data encryption key, TK. After the two parties exchange the random numbers, RA and RB, using the first two messages of the mesh link establishment protocol, the TK is derived as the following:

$$TK \leftarrow kdf_K(max(RA, RB) \,\|\, min(RA, RB) \,\|\, max(MPA, MPB) \,\|\, min(MPA, MPB)),$$

where RA is a random bit string provided by A in its first link establishment message and RB is a random bit string provided by B in its first link establishment message. TK may be considered the mesh analog of the 802.11 data encryption key. This process binds the derived keys to the MPA and MPB identifiers of party A and party B, respectively. The unique identifiers MPA and MPB may be the MAC addresses of mesh point A and mesh point B, respectively. In various embodiments, the derived keys may be used only for communication between mesh point A and mesh point B. With kdf based on a pseudo-random function, it is computationally infeasible for an adversary to learn anything about one of the keys from any of the others. The concatenations in these processes may be in any order. However, whichever order is selected, the selected order becomes specific in that both parties may use the same order or equivalent order.

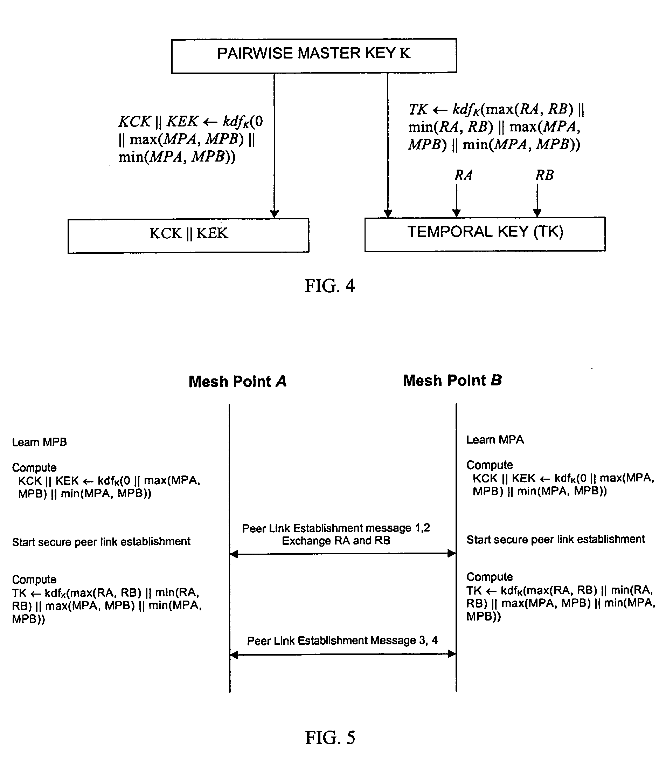

Figure 4 illustrates a key hierarchy derived using an algorithm in accordance with the discussion of embodiments herein. Figure 4 demonstrates the relationship between the pairwise master key, K, and KCK, KEK, and TK. Also demonstrated is the separation in the construction of KCK ∥ KEK and the construction of TK. In the process of computing KCK ∥ KEK and Tk, the generation of KCK and KEK is split from the generation of TK. In the generation of KCK and KEK, MPA and MPB are used with the number 0. In the generation of TK, random numbers RA and RB are non-zero. This provides key separation. Zero may be used since there is no need to guarantee that KCK and KEK are unique on each session. The random numbers, the RA and the RB in the generation of TK come from the execution of the protocol (transferred in the first two messages) and are mixed to provide that TK, the temporal key, is unique for this session. In various embodiments, establishing security in a peer-to-peer architecture with the generation of KCK and KEK split from the generation of TK may be accomplished in fewer than five link establishment messages.

Figure 5 illustrates an embodiment of the key derivation process during the peer link establishment protocol execution. Figure 5 provides a pictorial view as a function of the process flow as discussed with respect to Figure 3. Such a process may reduce processing overhead and complexity on wireless mesh devices.

In various embodiments, an AES counter mode encryption may be applicable for kdf for all derived keys, KEK, KCK, and TK. In the KCK and KEK derivation, "0" is the counter. When applying AES for kdf, the counter may be expanded to N bits. For instance, let N = length(RA ∥ RB). In the TK derivation, max(RA, RB) ∥ min(RA, RB) is the counter, while 0 is the counter for KCK ∥ KEK. Since the AES counter mode has been proven to be secure, it may be demonstrated that under an AES-CTR-based kdf, the key derivation, as used in various embodiments, is secure.

Activity in generating IEEE 802.11 s includes efforts to create a standard that enables client-type devices to participate in self-configuring mesh networks. In various embodiments related to the discussions herein, a mechanism is provided to derive keys that can be used to secure link establishment in a mesh. Such a feature may be applied to mesh networks in home, small office, other consumer spaces, and other networking applications.

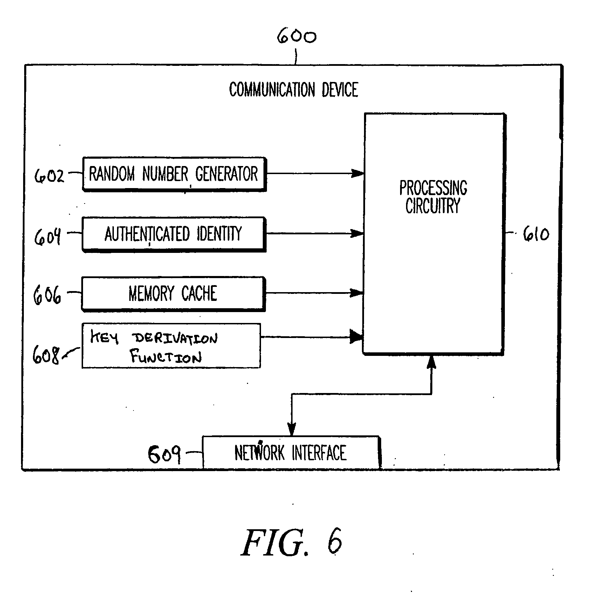

Figure 6 shows a block diagram of an embodiment of a wireless communication device 600 in accordance with various embodiments to derive keys during a peer link establishment protocol execution. Communication device 600 may be arranged as a mesh point similar to those discussed with respect to Figures 1-5. Communication device 600 includes a random number generator 602, an authenticated identity 604, memory cache 606, key distribution function 608, network interface circuitry 609, and processing circuitry 610. With each occurrence of communication device 600 as a mesh point in a mesh network, communication 600 maintains a state having its own set of characteristics.

Node A of Figure 1 in a mesh network, such as that of Figure 2, operating in an embodiment as discussed with respect to Figures 3-5 may be realized as including communication device 600, here referenced as communication device A. Node B of Figure 1 in a mesh network, such as that of Figure 2, operating in an embodiment as discussed with respect to Figures 3 -5 may be realized as including communication device 600, here referenced as communication device B. Communication device A includes authenticated identity 604 (MPA) that is uniquely defined in the mesh network and memory cache 606 that includes mesh point A's session keys (Ks). Communication device B includes authenticated identity 604 (MPB) that is uniquely defined in the mesh network and memory cache 606 that includes mesh point B's session keys (Ks). In an embodiment, communication device A and communication device B have only one session key in common.

Processing circuitry 610 may be used to conduct the derivation of keys for securing peer links, such as a peer-to-peer link between mesh A and mesh B, in the mesh network similar to the process discussed with respect to Figures 3-5. Processing circuitry 610 may be used to control the separate construction of the link authentication and key encryption keys from construction of the session encryption key. This separation enables security to be overlaid on top of the mesh link establishment protocol. For example, processing circuitry 610 of each of communication device A and communication device B may operate to control generation of a derived key confirmation key and a derived key encryption key before transmission of a first message of a link establishment protocol to another device. The generation may be based on application of a key derivation function to both authenticated identities of the mesh points. The authenticated identities may be related to each other by a rule set. The authenticated identities may the MAC addresses of mesh points A and B. Processing circuitry 610 of each of communication device A and communication device B may operate to insert a first random number in the first message to the other system and to extract a second random number from the first message received from the other system. Processing circuitry 610 of each of communication device A and communication device B may operate to control generation of a temporal key after reception of a first message of the link establishment protocol. Processing circuitry 610 may control the establishment of secure peer link according to one or more of the embodiments discussed with respect to Figures 1-5.

In a wireless embodiment, network interface circuitry 609 may be coupled with one or more antennas for use in communicating with other network devices. In a wireline embodiment, network interface circuitry 609 may be coupled with wired and/or wireline communication elements (e.g., wires, cables, busses, and/or other transmission medium).

Although communication device 600 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), and combinations of various hardware and logic circuitry for performing at least the functions described herein. The functional elements of communication device 600 may refer to one or more processes operating on one or more processing elements.

Various embodiments may be implemented in one or a combination of hardware, firmware, and software. Embodiments of the invention may also be implemented as instructions stored on a machine-readable medium, which may be read and executed by at least one processor to perform the operations described herein. A machine-readable medium may include any mechanism for storing or transmitting information in a form readable by a machine (for example, a computer). A machine-readable medium may include read-only memory (ROM), random-access memory (RAM), magnetic disk storage media, optical storage media, flash-memory devices, electrical, optical, acoustical or other form of propagated signals (e.g., carrier waves, infrared signals, digital signals, etc.), and others.

Communication device 600 may communicate using a variety of techniques. In various embodiments, communication device 600 may communicate orthogonal frequency division multiplexed (OFDM) communication signals over a multicarrier communication channel. The multicarrier communication channel may be within a predetermined frequency spectrum and may comprise a plurality of orthogonal subcarriers. The multicarrier signals may be defined by closely spaced OFDM subcarriers. Communication device 600 may communicate in accordance with a multiple access technique, such as orthogonal frequency division multiple access (OFDMA). In communication device 600 may communicate using spread-spectrum signals.

In various embodiments, communication device 600 may be realized as a portable wireless communication device, such as a personal digital assistant (PDA), a laptop or portable computer with wireless communication capability, a web tablet, a wireless telephone, a wireless headset, a pager, an instant messaging device, a digital camera, a television, a medical device, or other device that may receive and/or transmit information wirelessly.

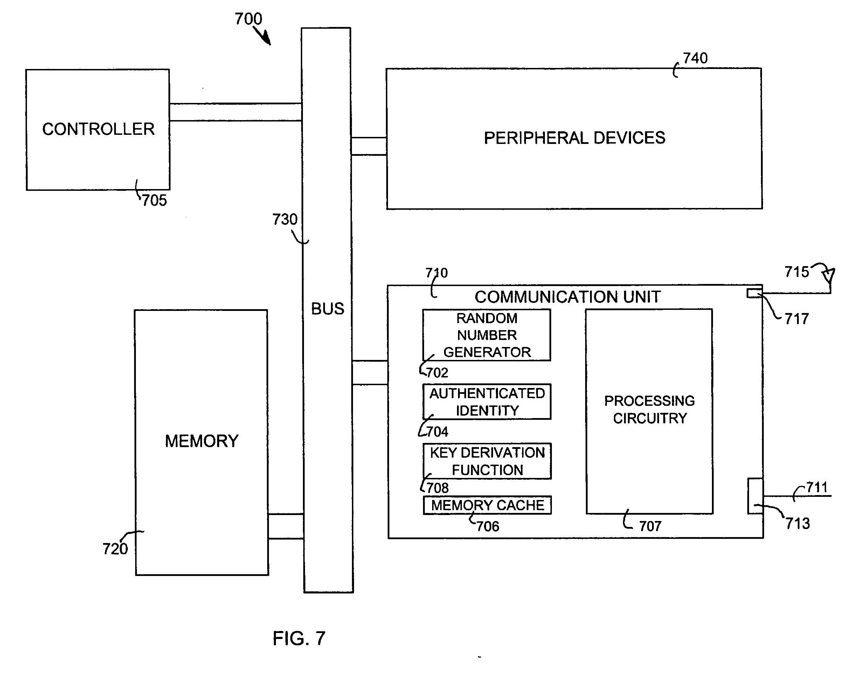

Figure 7 illustrates a block diagram of an embodiment of a system in accordance with various embodiments to derive keys during a peer link establishment protocol execution. Figure 7 illustrates a block diagram of an embodiment of a system 700 having an embodiment of a communication unit 710 to derive keys during a peer link establishment protocol execution according to an embodiment has discussed with respect to Figures 1-6. Communication unit 710 may be realized with a hardware architecture, a software based architecture, or combination of hardware/software architecture. Communication unit 710 may include a random number generator 702, an authenticated identity 704, a memory cache 706, a key derivation function 708, and a processing circuitry 707. Alternatively, one or more of random number generator 702, authenticated identity 704, memory cache 706, a key derivation function 708, and processing circuitry 707 may be implemented in other elements of system 700 or among other elements of system 700.

System 700 may also include a controller 705 and a bus 730, where bus 730 provides a communication path between controller 705 and a communication unit 710. In an embodiment, controller 705 is a processor. Bus 730 may be a parallel bus. Bus 730 may be a serial bus. Bus 730 may be compatible with Peripheral Component Interconnect (PCI) or with PCI express. An embodiment, system 700 may include a memory 720 and an additional peripheral device or devices 740 coupled to bus 730. Peripheral devices 740 may include one or more displays, alphanumeric input devices, cursor controls, memories, or other control devices that may operate in conjunction with controller 705, communication unit 710, and/or elements of communication unit 710.

Various embodiments for system 700 may be realized. System 700 may be arranged as a node, or a component of a node, in a network. A network node may be realized as a mesh point in a mesh network. The mesh network may be a wireless mesh network.

Communication unit 710 may include one or more network interfaces. In a wireless embodiment, communication unit 710 may include a connection 717 to couple to an antenna 715. In various embodiments, antenna 715 may comprise one or more directional or omnidirectional antennas, including, for example, dipole antennas, monopole antennas, patch antennas, loop antennas, microstrip antennas, or other types of antennas suitable for transmission of radio frequency (RF) signals. In various multiple-input, multiple-output (MIMO) embodiments, two or more antennas may be used. In various embodiments, instead of two or more antennas, a single antenna with multiple apertures may be used. Each aperture may be considered a separate antenna. In various multi-antenna embodiments, each antenna may be effectively separated to take advantage of spatial diversity and the different channel characteristics that may result between each of the antennas and another wireless communication device. In various multi-antenna embodiments, the antennas may be separated by up to 1/10 of a wavelength or more.

In various embodiments, communication unit 710 may include a connection 713 to couple to a transmission medium 711. Transmission medium 711 may be an optical fiber medium. Transmission medium 711 may couple to a wired network. Transmission medium 711 may be cable. Transmission medium 711 may include a coaxial cable, an unshielded twisted pair cable, or a shielded twisted pair cable.

System 700 may include, but is not limited to, information handling devices, wireless systems, telecommunication systems, fiber optic systems, electro-optic systems, and computers, which are structured to include peer-to-peer communications capabilities. Such embodiments may be used with an Ethernet channel, including a wireless Ethernet channel. The communication channel may be part of a land based communication mesh network or a wireless communication mesh network. Indeed, embodiments of the present invention may well be implemented as part of any wireless system using multi-carrier wireless communication channels (e.g., orthogonal frequency-division multiplexing (OFDM), discrete multi-tone modulation (DMT), etc.), such as may be used within, without limitation, a wireless personal area network (WPAN), a wireless local area network (WLAN), a wireless metropolitan are network (WMAN), a wireless wide area network (WWAN), a cellular network, a third generation (3G) network, a fourth generation (4G) network, a universal mobile telephone system (UMTS), and similar communication systems.

Although specific embodiments have been illustrated and described herein, it will be appreciated by those of ordinary skill in the art that any arrangement that is calculated to achieve the same purpose may be substituted for the specific embodiments shown. It is to be understood that the above description is intended to be illustrative, and not restrictive, and that the phraseology or terminology employed herein is for the purpose of description and not of limitation. Combinations of the above embodiments and other embodiments will be apparent to those of skill in the art upon studying the above description.

**Claims**

1. A method comprising:

   generating, at a first party, a derived key confirmation key and a derived key encryption key before sending a first message of a link establishment protocol to a second party to establish a secure peer-to-peer link between the first party and the second party, the generation performed using an identifier of the first party and an identifier of the second party, the identifiers related to each other by a rule set; and
   generating, at the first party, a temporal key after a first message of the link establishment protocol is received from the second party.

2. The method of claim 1, wherein using an identifier of the first party and an identifier of the second party includes using an identifier of the first party and an identifier of the second party that are lexicographically ordered.

3. The method of any preceding claim, wherein using an identifier of the first party and an identifier of the second party includes using a MAC address of the first party and a MAC address of the second party.

4. The method of any preceding claim, wherein generating a derived key confirmation key and a derived key encryption key includes applying a pseudo-random function to the identifier of the first party and an identifier of the second party with respect to a pairwise master key.

5. The method of any preceding claim, wherein applying a pseudo-random function to the identifier of the first party and an identifier of the second party with respect to a pairwise master key includes using an authorization token as the pairwise master key and using an ordering of the identifier of the first party and an identifier of the second party according to the rule set.

6. The method of either of claims 4 and 5, wherein applying the pseudo-random function to the identifier of the first party and an identifier of the second party with respect to a pairwise master key includes using a MAC address of the first party as the identifier of the first party and a MAC address of the second party as the identifier of the first second.

7. The method of any of claims 4 to 6, wherein applying the pseudo-random function includes applying the pseudo-random function to a concatenation that includes 0, maximum of the identifier of the first party and the identifier of the second party, and minimum of the identifier of the first party and the identifier of the second party.

8. The method of any preceding claim, wherein the method includes:

   generating, at the first party, a first random number to insert in the first message to the second party; and extracting a second random number from the first message from the second party.

9. The method of any preceding claim, wherein generating a temporal key includes applying a pseudo-random function, with respect to a pairwise master key, to a relationship between the first random number and the second random number and a relationship between the identifier of the first party and an identifier of the second party, the relationships arranged as a specified ordering on which the pseudo-random function operates.

10. The method of any preceding claim, wherein generating the temporal key includes using an authentication token as the pairwise master key, a MAC address of the first party as the identifier of the first party, and a MAC address of the second party as the identifier of the second party

11. The method of any preceding claim, wherein the method includes establishing the secure peer-to-peer link as a secure peer-to-peer link in a wireless mesh network.

12. The method of claim 11, wherein establishing the secure peer-to-peer link in a wireless mesh network includes establishing the secure peer-to-peer link compatibly with a mesh four message link establishment protocol.

13. An apparatus comprising:

   a memory cache to store session master authentication keys;
   an authenticated identity;
   a key derivation function, application of the key derivation function based on a selected one of the session master authentication keys; and
   processing circuitry to control establishment of a secure peer-to-peer communication link with another device including:

      circuitry to control generation of a derived key confirmation key and a derived key encryption key before transmission of a first message of a link establishment protocol to the other device, the generation based on application of the key derivation function to both the authenticated identity and an authenticated identity of the other device, the authenticated identities related to each other by a rule set; and
      circuitry to control generation of a temporal key after reception of a first message from the other device in the link establishment protocol.

14. The apparatus of claim 13, wherein the apparatus includes a random number generator to generate a first random number to include in the first message to the other device and the processing circuitry is arranged to extract a second random number from the first message from the other device.

15. The apparatus of either of claims 13 and 14, wherein the authenticated identity is a first MAC address and the authenticated identity of the other device is a second MAC address.

16. The apparatus of any of claims 13 to 15, wherein:

control of the generation of the derived key confirmation key and the derived key encryption key includes control of the application of the key derivation function with respect to the selected one of the session master authentication keys, the selected one of the session master authentication keys being an authorization token, such that the key derivation function is a pseudo-random function operable on a concatenation having a specified ordering that includes 0, maximum of the authenticated identity of the apparatus and the authenticated identity of the other device, and minimum of the authenticated identity of the apparatus and the authenticated identity of the other device; and

control of the generation of the temporal key includes application of the pseudo-random function, with respect to the authorization token, to a concatenation having a specified ordering that includes maximum of the first random number and the second random number, minimum of the first random number and the second random number, maximum of the authenticated identity of the apparatus and the authenticated identity of the other device, and minimum of the authenticated identity of the apparatus and the authenticated identity of the other device.

**17.** The apparatus of any of claims 13 to 14, wherein apparatus includes a portable device to communicate wirelessly in a mesh network.

**18.** A system comprising:

a substantially omnidirectional antenna to communicate with another system;
a memory to store session master authentication keys;
an authenticated identity;
a key derivation function, application of the key derivation function based on a selected one of the session master authentication keys;
a random number generator;
processing circuitry to control establishment of a secure peer-to-peer communication link with the other system including:

circuitry to control generation of a derived key confirmation key and a derived key encryption key before transmission of a first message of a link establishment protocol to the other system, the generation based on application of the key derivation function to both the authenticated identity and an authenticated identity of the other system, the authenticated identities related to each other by a rule set;
circuitry to control generation of a temporal key after reception of a first message of the link establishment protocol from the other system; and
circuitry to insert a first random number in the first message to the other system and to extract a second random number from the first message received from the other system.

**19.** The system of claim 18, wherein:

control of the generation of the derived key confirmation key and the derived key encryption key includes control of the application of the key derivation function with respect to the selected one of the session authentication keys, the selected one of the session master authentication keys being an authorization token, such that the key derivation function is a pseudo-random function operable on a concatenation of a specified ordering that includes 0, maximum of the authenticated identity of the system and the authenticated identity of the other system, and minimum of the authenticated identity of the system and the authenticated identity of the other system; and
control of the generation of the temporal key includes application of the pseudo-random function, with respect to the authorization token, to a concatenation of a specified ordering that includes maximum of the first random number and the second random number, minimum of the first random number and the second random number, maximum of the authenticated identity of the system and the authenticated identity of the other system, and minimum of the authenticated identity of the system and the authenticated identity of the other system.

**20.** The system of either of claims 18 and 19, wherein the system includes operability as a mesh point in a wireless mesh network.

NODE A

NODE B

**FIG. 1**

200

MESH POINT
1
210-1

MESH POINT
2
210-2

MESH POINT
N-1
210-(N-1)

MESH POINT
N
210-N

**FIG. 2**

| COMPUTE KCK AND KEK |
|---|

310

| START A SECURE PEER LINK ESTABLISHMENT |
|---|

320

| COMPUTE THE TEMPORAL KEY |
|---|

330

FIG. 3

PAIRWISE MASTER KEY K

$KCK \parallel KEK \leftarrow kdf_K(0 \parallel \max(MPA, MPB) \parallel \min(MPA, MPB))$

$TK \leftarrow kdf_K(\max(RA, RB) \parallel \min(RA, RB) \parallel \max(MPA, MPB) \parallel \min(MPA, MPB))$

RA          RB

KCK ‖ KEK

TEMPORAL KEY (TK)

FIG. 4

**Mesh Point *A***          **Mesh Point *B***

Learn MPB

Compute
KCK ‖ KEK ← kdf$_K$(0 ‖ max(MPA, MPB) ‖ min(MPA, MPB))

Start secure peer link establishment

Compute
TK ← kdf$_K$(max(RA, RB) ‖ min(RA, RB) ‖ max(MPA, MPB) ‖ min(MPA, MPB))

Learn MPA

Compute
KCK ‖ KEK ← kdf$_K$(0 ‖ max(MPA, MPB) ‖ min(MPA, MPB))

Start secure peer link establishment

Compute
TK ← kdf$_K$(max(RA, RB) ‖ min(RA, RB) ‖ max(MPA, MPB) ‖ min(MPA, MPB))

Peer Link Establishment message 1,2
Exchange RA and RB

Peer Link Establishment Message 3, 4

FIG. 5

600

COMMUNICATION DEVICE

602 — RANDOM NUMBER GENERATOR

604 — AUTHENTICATED IDENTITY

606 — MEMORY CACHE

608 — KEY DERIVATION FUNCTION

PROCESSING CIRCUITRY

— 610

609 — NETWORK INTERFACE

*FIG. 6*

FIG. 7